(19) Europäisches Patentamt

European Patent Office

Office européen des brevets

(11) EP 0 782 021 A1

## (12) DEMANDE DE BREVET EUROPEEN

(43) Date de publication:
02.07.1997 Bulletin 1997/27

(51) Int Cl.6: **G02B 6/34**

(21) Numéro de dépôt: 96402813.8

(22) Date de dépôt: 19.12.1996

(84) Etats contractants désignés:
DE ES GB IT NL SE

(30) Priorité: 28.12.1995 FR 9515658

(71) Demandeur: Alcatel Optronics
75008 Paris (FR)

(72) Inventeur: **Mestric, Roland**
**75014 Paris (FR)**

(74) Mandataire: **Fournier, Michel Robert Marie**
**c/o ALCATEL ALSTHOM,**
**Département de Propriété Industrielle,**
**30, avenue Kléber**
**75116 Paris (FR)**

(54) **Démultiplexeur optique à réseau de guides**

(57)    Le démultiplexeur comporte deux coupleurs reliés entre eux par un réseau de guides de longueurs toutes différentes.

Pour réaliser un composant à réseau d'ordre faible et peu encombrant, chaque guide comporte trois segments adjacents (T1, T2, T3) ayant respectivement des rayons de courbure positif, négatif et positif.

Application notamment aux communications optiques duplex.

FIG. 5

## Description

L'invention se situe dans le domaine des composants photoniques et concerne plus particulièrement les démultiplexeurs de longueurs d'onde.

Ces dispositifs, généralement réalisés sous la forme de composants intégrés trouvent de nombreuses applications dans les systèmes de communication optique utilisant plusieurs longueurs d'onde. Nous considérons plus particulièrement le cas des démultiplexeurs à large bande, c'est-à-dire ceux qui sont destinés à séparer des longueurs d'onde relativement éloignées. Ces dispositifs sont aussi utilisables en tant que duplexeurs dans les émetteurs-récepteurs pour les communications bidirectionnelles duplex.

Un type de multiplexeur ou démultiplexeur particulièrement intéressant est constitué de deux coupleurs en étoile reliés entre eux par un réseau de guides de longueurs toutes différentes. Or, pour réaliser un démultiplexeur de ce type à large bande, on est conduit à choisir un réseau d'ordre peu élevé. En effet, l'ordre m est défini par : $m=n\Delta L/\lambda o$, où n est l'indice effectif du milieu constituant les guides, $\Delta L$ est le pas du réseau, c'est-à-dire la différence entre les longueurs de deux guides voisins et $\lambda o$ est la longueur d'onde moyenne dans le vide du multiplex d'entrée.

Comme d'autre part l'écart $\Delta\lambda$ entre les longueurs d'onde extrêmes est inversement proportionnel à l'ordre m du réseau, on est conduit à choisir un ordre faible, par exemple égal à 2 ou 3. Il en résulte que le pas $\Delta L$ est faible, ce qui conduit à des difficultés pour réaliser le tracé des guides.

Le brevet US 5 212 758 donne une solution pour réaliser un réseau de guides à faible pas. Cette solution repose sur une configuration dite en "S" et comporte trois sections distinctes : deux sections en demi-cercle de part et d'autre d'une section centrale incurvée. Bien qu'elle permette d'obtenir le résultat recherché, cette solution n'est pas optimale du point de vue de l'encombrement du réseau.

Dans le but d'optimiser cet encombrement, l'invention a pour objet un démultiplexeur de longueurs d'onde comprenant un premier et un second coupleurs en étoile et un réseau de guides de longueurs toutes différentes, chaque coupleur comportant une face de couplage cylindrique, lesdits guides comportant des premières et secondes extrémités reliées respectivement aux faces de couplage desdits premier et second coupleurs, perpendiculairement auxdites faces et en des points dont les positions sur chaque face vérifient une fonction linéaire desdites longueurs, caractérisé en ce que le tracé de chaque guide comporte successivement des premier, second et troisième segments adjacents ayant respectivement des rayons de courbure positif, négatif et positif, la concavité desdits premier et troisième segments du plus long desdits guides étant orientée vers les autres guides du réseau

La technologie utilisée et surtout le choix de la structure des guides imposent une limite inférieure en valeur absolue aux valeurs que peuvent prendre les rayons de ces guides. Aussi, dans les cas où cette valeur minimale ne permet pas de réaliser le tracé avec les trois segments précités seulement, on prévoira avantageusement que les premières et/ou secondes extrémités des guides sont rectilignes.

Selon un autre aspect de réalisation visant à simplifier le calcul des tracés des guides, on prévoira que ceux-ci sont symétriques par rapport à un plan.

Par ailleurs, la compacité du dispositif sera améliorée si le guide du réseau qui est le plus long a un segment central rectiligne. Dans le même but, les premier et troisième segments de ce guide le plus long auront un rayon de courbure ayant la valeur minimale qui conserve les propriétés de guidage des ondes dans ce guide.

En variante, on peut aussi réaliser un démultiplexeur à l'aide d'un réseau de guides fonctionnant en réflexion. Selon cette variante de l'invention, le démultiplexeur comprend un coupleur en étoile et un réseau de guide de longueurs toutes différentes et se terminant par des faces réfléchissantes, ledit coupleur comportant une face de couplage cylindrique, lesdits guides comportant des extrémités reliées à ladite face de couplage perpendiculairement et en des points dont les positions sur ladite face vérifient une fonction linéaire desdites longueurs, caractérisé en ce que le tracé de chaque guide comporte deux segments adjacents ayant respectivement des rayons de courbure positifs et négatifs de sorte que lesdites faces réfléchissantes se trouvent dans un même plan.

D'autres aspects et avantages de l'invention apparaîtront dans la suite de la description en référence aux figures.

- la figure 1 est une représentation schématique d'un démultiplexeur à réseau de guides auquel peut s'appliquer l'invention.
- la figure 2 montre une section transversale d'un exemple de réalisation des guides du réseau.
- la figure 3 représente un des coupleurs relié aux extrémités rectilignes des guides.
- la figure 4 sert à expliquer une méthode utilisable pour réaliser le tracé des guides du réseau.
- la figure 5 est une vue d'ensemble d'une réalisation particulière d'un démultiplexeur conforme à l'invention.
- la figure 6 montre un tracé d'un démultiplexeur équivalent selon l'état de la technique.

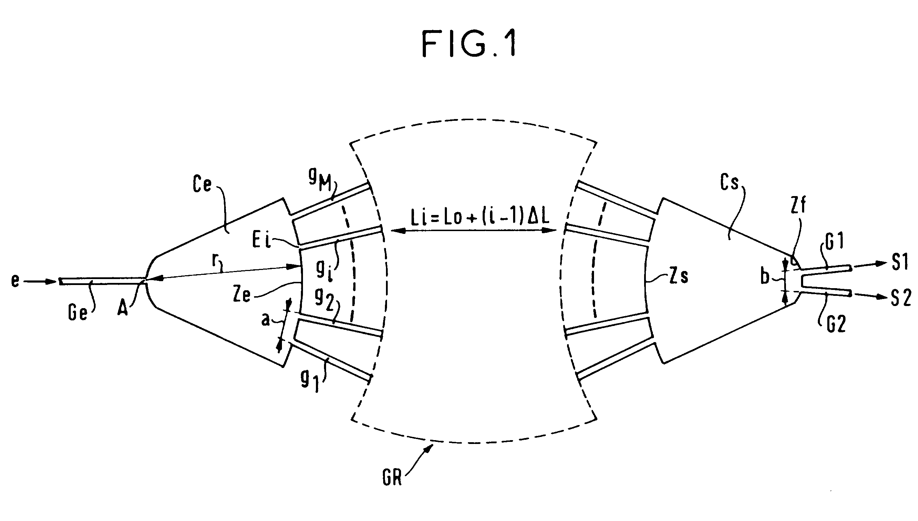

La figure 1 est une vue de dessus schématique d'un démultiplexeur à réseau de guides.

Il est constitué d'un premier coupleur en étoile Ce dont l'entrée A est reliée à un guide d'entrée Ge. La face du coupleur Ce qui se trouve à l'opposé du guide d'entrée Ge constitue une face de couplage Ze qui est reliée à l'entrée d'un réseau GR constitué des guides $g_1$,..., $g_i$,...,$g_M$. L'autre extrémité du réseau GR est reliée à une autre face de couplage Zs d'un second coupleur en étoile Cs. Sa face Zf qui est à l'opposé de la face de couplage Zs constitue une surface de focalisation qui est reliée à des guides de sortie G1, G2. Les guides G1, G2 fournissent respectivement les signaux de sortie S1, S2 ayant respectivement les longueurs d'onde λ1, λ2.

Dans une réalisation intégrée, les coupleurs et les guides sont constitués de couches guidantes de faible épaisseur par rapport aux autres dimensions du dispositif. D'un point de vue géométrique, les deux faces opposées de chaque coupleur qui sont reliées à des guides sont cylindriques et de même rayon. Généralement, les deux coupleurs sont de dimensions identiques.

Pour obtenir la fonction de démultiplexage, les guides $g_i$ sont tous de longueurs différentes $L_i$ et les points de couplage Ei ont des positions sur les faces Ze et Zf qui vérifient une fonction linéaire de ces longueurs. Pour des raisons de compacité et de simplicité, l'ensemble sera symétrique et les points de couplage Ei seront régulièrement espacées le long des surfaces de couplage Ze, Zs. La longueur du guide $g_i$ de rang i vaut alors $L_i=L_0+(i-1)\Delta L$, où $L_0$ est la longueur du guide le plus court $g_1$, et $\Delta L$ est le pas du réseau.

Si λo est la longueur d'onde moyenne dans le vide du multiplex d'entrée, on pourra choisir $\Delta L= m\lambda_0/n$, m étant l'ordre du réseau et n l'indice effectif des couches guidantes du réseau.

Dans son fonctionnement en démultiplexeur, le multiplex e est introduit dans le premier coupleur Ce par l'intermédiaire du guide d'entrée Ge. Les différentes longueurs d'onde constituant le multiplex focalisent alors à l'entrée des guides de sortie G1, G2.

La propriété de séparer les longueurs d'onde de ce dispositif étant indépendante du sens de propagation, on peut l'utiliser comme duplexeur dans un émetteur-récepteur pour système de communication "full duplex", c'est-à-dire bidirectionnelle, sur une seule fibre et simultanément. Dans ce cas, le signal reçu, porté par exemple par la longueur d'onde λ1, est introduit dans le coupleur Ce par le guide Ge et détecté en sortie du guide G1. Le signal à émettre, porté par la longueur d'onde λ2, est introduit dans le coupleur Cs par le guide G2 puis émis par le guide Ge.

Dès qu'on a fait le choix d'une technologie de fabrication et d'une structure des guides, le dimensionnement du démultiplexeur est essentiellement conditionné par les valeurs extrêmes des longueurs d'onde que l'on cherche à séparer. Par ailleurs, le nombre M de guides du réseau est choisi en fonction de l'écart entre les longueurs d'onde voisines à séparer et de façon à optimiser la réponse spectrale des signaux de sortie.

Ainsi dans le cas où l'on souhaite utiliser le dispositif en tant que duplexeur, on aura par exemple :

$\lambda_1 = 1,31$ μm
$\lambda_2= 1,55$ μm
$\Delta\lambda = \lambda_2 - \lambda_1 = 0,24$ μm
M= 6 à 10.
λo= 1,46 μm

Les paramètres géométriques du dispositif à déterminer sont alors :

r= rayon des faces de couplage Ze et de focalisation Zf
a= écart entre les centres des guides du réseau au niveau des coupleurs
b= distance entre les centres des guides de sortie qui correspondent aux valeurs extrêmes des longueurs d'onde, au niveau du coupleur de sortie.
m= ordre du réseau.

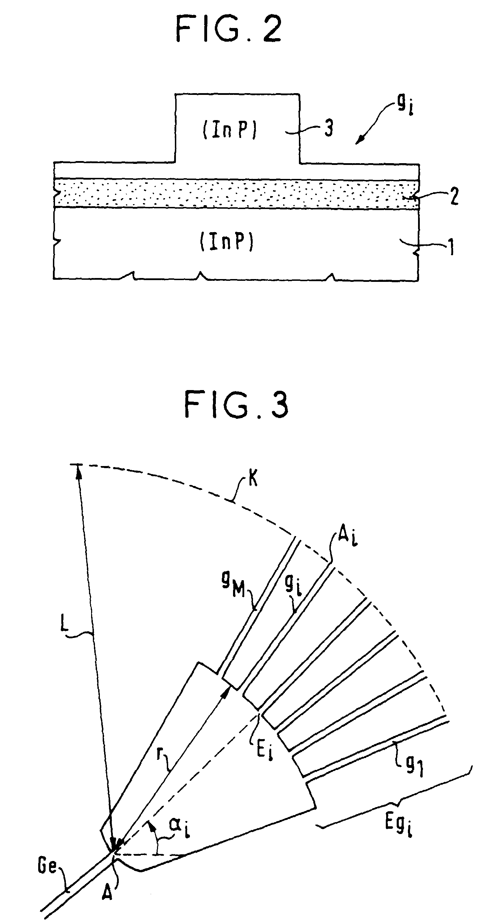

Avant d'exposer une méthode possible pour calculer ce tracé, nous indiquons en référence à la figure 2 une structure utilisable pour réaliser les guides $g_i$ du réseau. La structure est de type "ridge", intégrée sur un substrat de phosphure d'indium. La couche guidante 2 est initialement enterrée dans une couche de confinement vertical. Pour former le guide, on a effectué des gravures latérales de la couche de confinement jusqu'à une couche d'arrêt de gravure située au-dessus de la couche guidante 2. La partie 3 de la couche de confinement qui subsiste après gravure assure le confinement latéral conférant la propriété de guidage latéral des ondes dans la couche 2.

Du point de vue dimensions, on aura par exemple :

- épaisseur de la couche guidante 2 : 0,3 μm
- largeur de la partie 3 : 1,5 μm
- profondeur de la gravure : 0,9 μm
- distance entre la couche 2 et le haut du guide : 1 μm

Avec cette structure, l'indice effectif n est d'environ 3,25 et le rayon de courbure minimal du guide est de l'ordre de 1,2 mm.

En pratique, il est préférable que les guides soient suffisamment écartés avant de présenter une courbure. Pour cela, on pourra prévoir une prolongation des coupleurs par des extrémités $Eg_i$ rectilignes des guides, comme représenté à la figure 3. Dans le cas où ces extrémités sont de même longueur, les parties incurvées des guides commencent à partir d'un arc de cercle K centré à l'entrée A et de rayon L. Par exemple, pour le guide $g_i$ orienté selon l'angle $\alpha_i$, sa partie incurvée débute au point $A_i$ situé sur l'arc K.

On pourrait toutefois se dispenser de ces extrémités rectilignes en augmentant le confinement des guides. De plus, l'augmentation du confinement permet de diminuer la valeur minimum du rayon de courbure admissible. Pour cela, il suffit par exemple de placer la couche d'arrêt de gravure en dessous de la couche guidante.

Par ailleurs, il est concevable que ces parties rectilignes soient de longueurs différentes, certaines pouvant être de longueur nulle.

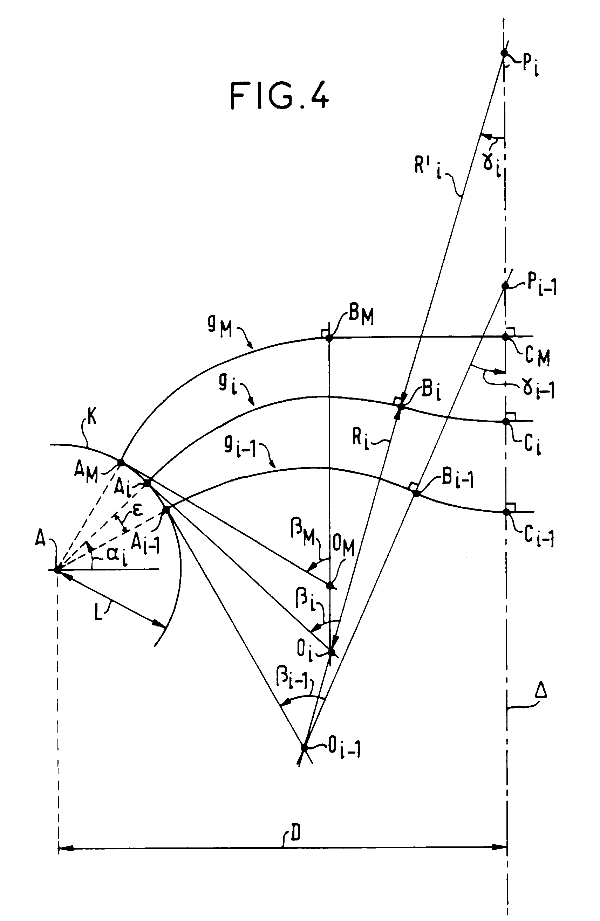

La suite du tracé des guides va maintenant être expliquée en référence à la figure 4. Les guides sont au nombre de M et leurs extrémités rectilignes sont disposées comme représentées sur la figure. On procède d'abord au placement d'une droite $\Delta$ correspondant à la trace d'un plan de symétrie des guides. Ce placement est à priori arbitraire mais est susceptible d'être modifié si le tracé complet du réseau aboutit à une impossibilité telle que le croisement d'un ou de plusieurs guides. On choisira par exemple une orientation perpendiculaire à l'extrémité rectiligne du premier guide $g_1$ et à une distance D de l'entrée A. La distance D est de l'ordre de grandeur du rayon minimum des guides.

Compte tenu de la symétrie, il suffira de déterminer le tracé de la moitié de chaque guide, puis de compléter symétriquement par rapport à la droite $\Delta$.

On impose par ailleurs que les parties incurvées des guides soient constituées d'arcs de cercle consécutifs, tangents entre eux et de rayons de courbure de signes opposés. On impose enfin que le premier arc de cercle de chaque guide soit tangent à sa partie rectiligne, c'est-à-dire soit perpendiculaire à l'arc K (ou à l'arc formé par la face Ze). De même, le second arc de cercle est perpendiculaire à la droite $\Delta$. Chaque guide $g_i$ sera défini par l'angle $\alpha_i$ de sa partie rectiligne par rapport à une perpendiculaire à la droite $\Delta$ et par les deux arcs successifs $A_iB_i$ et $B_iC_i$. L'arc $A_iB_i$ est lui-même défini par son centre $O_i$, son rayon $R_i$ et son angle au centre $\beta_i$. L'arc $B_iC_i$ est défini par son centre $P_i$, son rayon $R'_i$ et son angle au centre $\gamma_i$.

Compte tenu de ces notations et des notations précédemment définies, on devra vérifier pour tout i les conditions suivantes :

$$(1) \qquad \alpha_i - \alpha_{i-1} = \varepsilon,$$

avec $\varepsilon$ constant,

$$(2) \qquad L_i = Lo+(i-1)\Delta L$$

$$(3) \qquad L_{i-1} = L_i - \Delta L$$

$$(4) \qquad L_i = 2(L-r+R_i\beta_i+R'_i\gamma i)$$

$$(5) \qquad L\cos\alpha_i + R_i\left[\sin(\beta_i - \gamma_i)+\sin\gamma_i\right] + R'_i\sin\gamma_i = D$$

$$(6) \qquad \beta_i - \gamma_i = \alpha_i$$

$$(7) \qquad R_i\beta_i + R'_i\gamma_i = R_{i-1}\beta_{i-1} + R'_{i-1}\gamma_{i-1} + \Delta L$$

où toutes les grandeurs indiquées sont positives.

En pratique, on commence par effectuer le tracé du plus long guide $g_M$. On choisit comme valeur du rayon $R_M$ la valeur minimale du rayon de courbure autorisé par la structure du guide. On impose d'autre part un rayon $R'_M$ infini. Ces deux conditions imposent le centre $O_M$ et définissent donc les arcs $A_MB_M$ et $B_MC_M$.

Pour le tracé du guide suivant $g_i$, on choisit comme centre $O_i$ l'intersection de la tangente en $A_i$ à l'arc K avec la parallèle à $\Delta$ passant par $O_M$. L'arc au centre $\beta_i$ est calculé en utilisant l'équation (7), $R'_i$ étant donné en fonction de $\beta_i$ par l'équation (5).

De la même façon, pour déterminer l'arc suivant $g_{i-1}$, on choisit comme centre $O_{i-1}$ l'intersection de la tangente en $A_{i-1}$ à l'arc K avec la droite $O_i B_i$. L'angle $\beta_{i-1}$ est également calculé au moyen de la formule (7), $R'_{i-1}$ étant donné en fonction de $\beta_{i-1}$ par l'équation (5).

S'il s'avère, en suivant cette méthode, que certains guides se croisent ou soient trop rapprochés, il conviendra de modifier la position de $\Delta$.

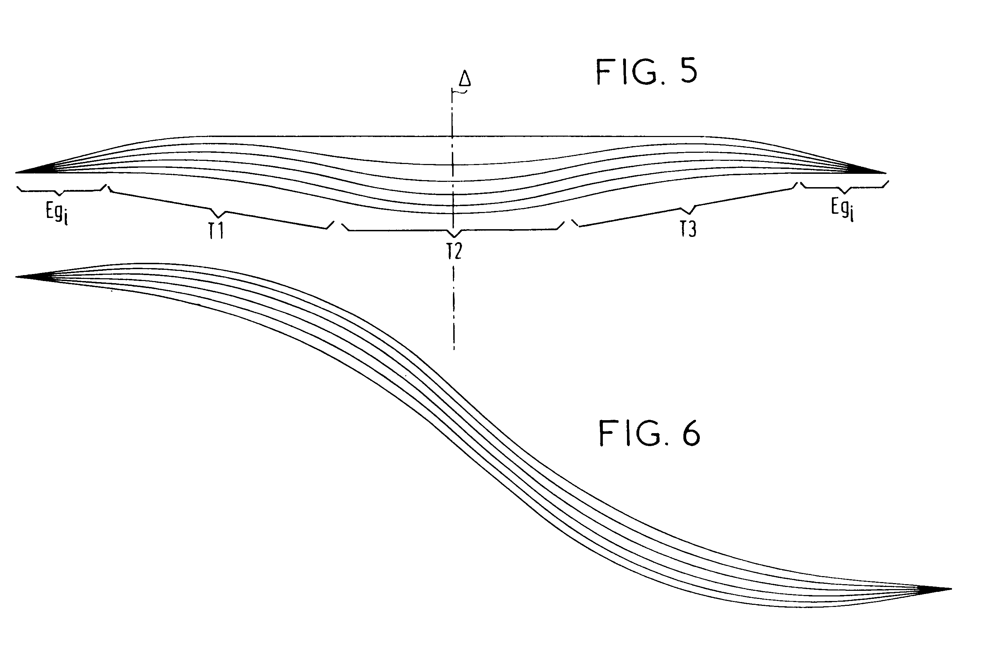

A titre d'illustration, la figure 5 représente un tracé obtenu avec la méthode précédente dans le cas du duplexeur mentionné précédemment. En prenant :

a = 2,2 μm
b = 3,0 μm
r = 45 μm
ΔL = 0,88 μm
M = 6
m = 2 ,

l'ensemble a une longueur de 2,5 mm, sur une largeur de 250 μm.

La figure 6 montre à titre de comparaison le tracé d'un duplexeur ayant les mêmes caractéristiques et utilisant le procédé selon l'état de la technique.

Une variante de réalisation consiste à utiliser le réseau de guides en réflexion. Dans ce cas, on utilise un seul coupleur et un demi-réseau de guides terminés par des faces réfléchissantes. En utilisant la méthode de tracé précédente, ces faces peuvent être réalisées par simple clivage du composant le long de la droite $\Delta$.

L'invention ne saurait être limitée au seul mode de réalisation qui vient d'être décrit. Ainsi, le pas du réseau pourrait ne pas être constant. De même, il serait possible de ne pas réaliser les guides qui recevraient une puissance optique nulle ou négligeable.

Enfin, les longueurs des guides pourraient être considérées comme des chemins optiques pour tenir compte des variations possibles de l'indice effectif n dans la structure.

## Revendications

1.  Démultiplexeur de longueurs d'onde comprenant un premier et un second coupleur (Ce, Cs) en étoile et un réseau (GR) de guides ($g_i$) de longueurs ($L_i$) toutes différentes, chaque coupleur (Ce, Cs) comportant une face de couplage cylindrique (Ze, Zs), lesdits guides ($g_i$) comportant des premières et secondes extrémités (Egi) reliées respectivement aux faces de couplage (Ze, Zs) desdits premier et second coupleurs (Ce, Cs) perpendiculairement auxdites faces (Ze, Zs) et en des points (Ei) dont les positions sur chaque face (Ze, Zs) vérifient une fonction linéaire desdites longueurs (Li), caractérisé en ce que le tracé de chaque guide ($g_i$) comporte successivement des premier, second et troisième segments adjacents ($T_1$, $T_2$, $T_3$) ayant respectivement des rayons de courbure ($R_i$, $R'_i$) positif, négatif et positif, la concavité desdits premier et troisième segments ($T_1$, $T_3$) du plus long des guides ($g_M$) étant orientée vers les autres guides du réseau (GR).

2.  Démultiplexeur selon la revendication 1, caractérisé en ce que lesdites premières et/ou secondes extrémités (Egi) sont rectilignes.

3.  Démultiplexeur selon l'une des revendications 1 ou 2, caractérisé en ce que lesdits guides ($g_i$) sont symétriques par rapport à un plan ($\Delta$).

4.  Démultiplexeur selon la revendication 3, caractérisé en ce que le guide ($g_M$) du réseau qui est le plus long comporte une section centrale de rayon de courbure infini.

5.  Démultiplexeur selon la revendication 4, caractérisé en ce que les premier et troisième segments dudit guide ($g_M$) le plus long ont un rayon de courbure ($R_M$) ayant la valeur minimale qui conserve les propriétés de guidage des ondes dans ledit guide.

6.  Démultiplexeur de longueurs d'onde comprenant un coupleur (Ce) en étoile et un réseau (GR) de guide ($g_i$) de longueurs toutes différentes et se terminant par des faces réfléchissantes, ledit coupleur (Ce) comportant une face de couplage cylindrique (Ze), lesdits guides ($g_i$) comportant des extrémités (Egi) reliées à ladite face de couplage (Ze) perpendiculairement et en des points (Ei) dont les positions sur ladite face (Ze) vérifient une fonction linéaire desdites longueurs, caractérisé en ce que le tracé de chaque guide ($g_i$) comporte deux segments adjacents ayant respectivement des rayons de courbure ($R_i$, $R'_i$) positifs et négatifs de sorte que lesdites faces réfléchissantes se trouvent dans un même plan.

7. Démultiplexeur selon la revendication 6, caractérisé en ce que lesdites extrémités (Egi) sont rectilignes.

8. Démultiplexeur selon l'une des revendications 6 ou 7, caractérisé en ce que le guide ($g_M$) du réseau qui est le plus long a un second segment de rayon de courbure infinie.

9. Démultiplexeur selon la revendication 8, caractérisé en ce que la premier segment dudit guide ($g_M$) le plus long a un rayon de courbure ($R_M$) ayant la valeur minimale qui conserve les propriétés de guidage des ondes dans ledit guide ($g_M$). 10) Utilisation du démultiplexeur selon l'une des revendications 1 à 9, pour réaliser un émetteur-récepteur bidirectionnel dans un système de communication optique duplex.

FIG.1

# FIG. 2

# FIG. 3

# FIG.4

FIG. 5

$E_{g_i}$  T1  T2  T3  $E_{g_i}$

$\Delta$

FIG. 6

EP 0 782 021 A1

**Office européen des brevets**

# RAPPORT DE RECHERCHE EUROPEENNE

Numero de la demande

EP 96 40 2813

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.6) |
|---|---|---|---|
| X | JOURNAL OF LIGHTWAVE TECHNOLOGY, vol. 12, no. 6, 1 Juin 1994, pages 989-995, XP000484216 HIROSHI TAKAHASHI ET AL: "WAVELENGTH MULTIPLEXER BASED ON SIO2-TA2O5 ARRAYED-WAVEGUIDE GRATING" * page 990, colonne de gauche; figure 1 * | 1-4 | G02B6/34 |
| A | JOURNAL OF LIGHTWAVE TECHNOLOGY, vol. 8, no. 1, 1 Janvier 1990, pages 118-124, XP000104176 VELLEKOOP A R ET AL: "A SMALL-SIZE POLARIZATION SPLITTER BASED ON A PLANAR OPTICAL PHASED ARRAY" * page 118, colonne de droite; figure 1 * | 1-3,5,7, 9 | |
| A,D | US 5 212 758 A (ADAR RENEN ET AL) 18 Mai 1993 * colonne 1, ligne 11 - ligne 64; figures 2,4 * | 1,2,6,7, 10 | |
| A | US 5 396 507 A (KAMINOW IVAN P ET AL) 7 Mars 1995 * colonne 3, ligne 62 - colonne 4, ligne 32; figure 1 * | 6-8 | **DOMAINES TECHNIQUES RECHERCHES (Int.Cl.6)** G02B |
| A | US 5 412 744 A (DRAGONE CORRADO) 2 Mai 1995 * colonne 2, ligne 40 - colonne 3, ligne 56; figure 1 * | 1-5,7-10 | |

Le présent rapport a été établi pour toutes les revendications

| Lieu de la recherche | Date d'achèvement de la recherche | Examinateur |
|---|---|---|
| BERLIN | 1 Avril 1997 | von Moers, F |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant